# EUROPÄISCHE PATENTSCHRIFT

(11) **EP 1 055 332 B1**
(45) Veröffentlichungstag und Bekanntmachung des Hinweises auf die Patenterteilung: **01.03.2006**
(21) Anmeldenummer: 98964358.0
(22) Anmeldetag: 13.11.1998
(51) Int. Cl.: H04Q 3/00

(54) **VERFAHREN UND VORRICHTUNG ZUR GESICHERTEN BEREITSTELLUNG VON FUNKTIONEN EINES SIGNALISIERUNGSNETZES FÜR VERTEILTE TELEKOMMUNIKATIONSANWENDUNGEN**
PROCESS AND DEVICE FOR THE SECURED AVAILABILITY OF SIGNALLING NETWORK FUNCTIONS FOR DISTRIBUTED TELECOMMUNICATION APPLICATIONS
PROCEDE ET DISPOSITIF POUR LA DISPONIBILITE PROTEGEE DE FONCTIONS D'UN RESEAU DE SIGNALISATION POUR APPLICATIONS DE TELECOMMUNICATIONS DISTRIBUEES

(30) Priorität: 13.02.1998 DE 19805943
(43) Veröffentlichungstag der Anmeldung: 29.11.2000
(73) Patentinhaber: SIEMENS AKTIENGESELLSCHAFT, 80333 München (DE)
(72) Erfinder: DITTMANN, Werner, D-83544 Albaching (DE)
(86) Internationale Anmeldenummer: PCT/DE1998/003342
(87) Internationale Veröffentlichungsnummer: WO 1999/041915

(56) Entgegenhaltungen:
- WO-A-96/25012
- US-A- 5 325 419
- US-A- 5 655 007
- MOLVA R. ET AL.: "Strong authentication in intelligent network" PROCEEDINGS OF 1994 3RD IEEE INTERNATIONAL CONFERENCE ON UNIVERSAL PERSONAL COMMUNICATIONS,27. September 1994 - 1. Oktober 1994, Seiten 629-634, XP002104730 San Diego, CA (USA)

## Beschreibung

Viele Telekommunikationsanwendungen benötigen Funktionen eines Signalisierungsnetzes und werden daher heute nur auf solchen Systemen realisiert, die eine Verbindung zu solch einem Signalisierungsnetz haben. Das bedeutendste in der Praxis zum Einsatz kommende Signalisierungsnetz ist vermutlich das sogenannte Signalisierungsnetz #7 (im folgenden auch einfach #7-Netz genannt). Solche Systeme mit direkter Anbindung an ein Signalisierungsnetz, auf denen heute Telekommunikationsanwendungen realisiert werden, sind digitale Vermittlungsstellen (z.B. für die ISDN-Supplementary Services) oder zentrale Einrichtungen eines Intelligenten Netzwerks (IN).

Eine Verteilung solcher Anwendungen auf Einrichtungen (Systeme), die keinen direkten Anschluß an ein Signalisierungsnetz haben, wird heute nicht angeboten. Diese bekannte Technik hat sowohl Vor- als auch Nachteile. Die schwerwiegendsten Nachteile sind.
a) Funktionen in den Vermittlungsstellen stehen üblicherweise nur dem von der Vermittlung überdeckten Bereich zur Verfügung, aber nicht im gesamten Telekommunikationsnetz.
b) Vermittlungsstellen können nicht einfach von Dritten um Anwendungen erweitert werden, da es sich meist um proprietäre Spezialsysteme handelt.
c) Die wenigen zentralen IN-Systeme, die alle Anwendungen (z.B. IN-Mehrwertdienste) ausführen müssen, erfordern einen hohen Administrationsaufwand, sind Engpässe bei hohem Verkehrsaufkommen, und sind hinsichtlich der Zuverlässigkeit ihrer Funktion sehr kritisch.
d) Auf den zentralen IN-Systemen sind alle Daten aller IN-Anwendungen vorhanden, obwohl viele Daten rein anwendungsspezifisch sind. Diese Tatsache führt unter anderem zu dem erwähnten hohen Adminiscrationsaufwand und bringt darüber hinaus noch weitere Probleme mit sich, denn dieser große Datenbestand muß regelmäßig gesichert und vor unbefugtem Zugriff geschützt werden.

Diesen Nachteilen stehen folgende Vorteile dieser bekannten Lösungen gegenüber:
a) Die bekannten Lösungen basieren auf einer sicheren und ausgereiften Technik. Dies ist für den Betrieb eines Telekommunikationsnetzes ein entscheidender Faktor.
b) Alle notwendigen Funktionen für Gebührenerfassung, Abrechnung, Statistik und zur Erfüllung sonstiger gesetzlicher Vorgaben sind vorhanden und zertifiziert.

Der Erfindung liegt nun die Aufgabe zugrunde, eine Verbesserung der bekannten Technik anzugeben, welche die genannten Nachteile vermeidet und dabei die genannten Vorteile wahrt.

Diese Aufgabe wird nach der vorliegenden Erfindung durch ein Verfahren gemäß Anspruch 1 und durch eine Vorrichtung gemäß Anspruch 4 gelöst. Die Erfindung basiert demnach auf der grundlegenden Idee, die Anwendungslogik eines Telekommunikationsnetzes von sicherheitsrelevanten Systemkomponenten dadurch zu trennen, daß erstere auf dezentralen Einrichtungen des Kommunikationsnetzes und letztere auf zentralen Einrichtungen des Kommunikationsnetzes eingerichtet werden bzw. sind. Dabei stellen geeignete Kommunikationsmittel zwischen zentralen und dezentralen Einrichtungen sicher, daß zentral verfügbare Funktionen aus einer dezentral implementierten Anwendungslogik heraus aufgerufen werden können. Sicherheitsfunktionen zum Schutz des Signalisierungsnetzes und bzw. oder einer zentralen Einrichtung werden auf zentralen Einrichtungen eingerichtet oder genutzt.

Im folgenden wird die Erfindung anhand bevorzuater Ausführungsbeispiele und mit Hilfe von Figuren näher beschrieben.

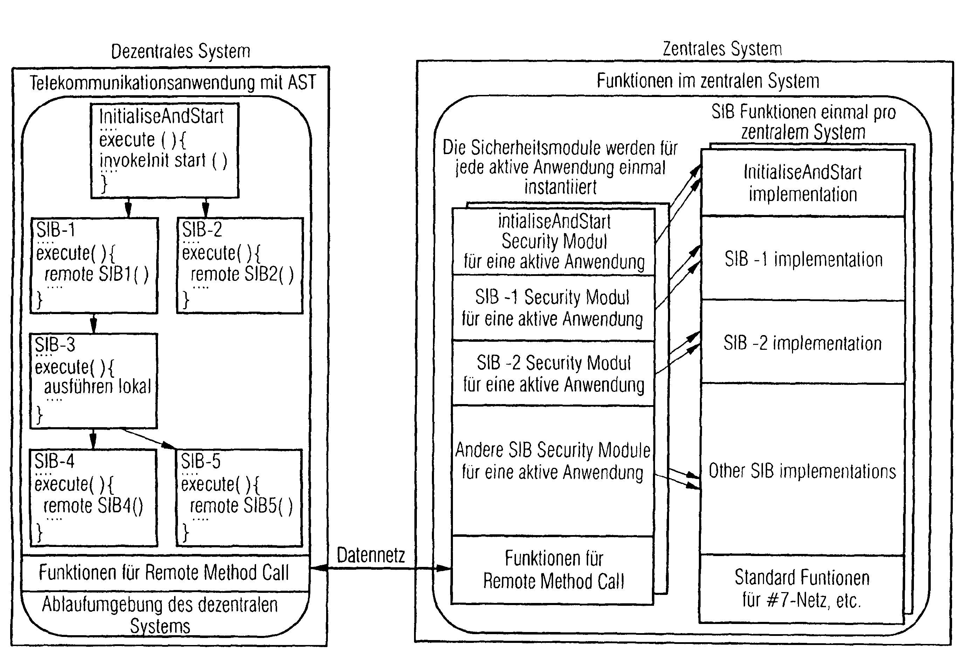

FIG 1 zeigt eine schematische Darstellung erfindungswesentlicher Aspekte der Funktionsaufteilung zwischen dezentralen und zentralen Einrichtungen eines Kommunikationsnetzes gemäß der vorliegenden Erfindung.

Das neue Verfahren verwendet das bei Telekommunikationsanwendungen bereits bekannte Konzept des Service Independent Building Block (SIB) und erweitert es um einige Funktionen und Konzepte. Eine Erweiterung besteht darin, das die SIBs als generelle Funktionsmodule gesehen werden und ihre Verwendung daher nicht auf IN-Dienste und IN-Systeme beschränkt ist.

Ein SIB wird durch seine externen Eigenschaften (z.B. Operanden, Ein- und Ausgänge) sowie durch sein Verhalten (die Funktion) beschrieben.

Mit SIBs werden die Basisfunktionen des Signalisierungsnetzes für die verteilten Anwendungen bereitgestellt, z.B.:
- Connect (Verbinden eines Rufes)
- Play Announcement (Spielen einer Ansage)
- Release (Auslösen eines Rufes)

Diese Aufzählung von Anwendungen ist nicht abschließend sondern nur beispielhaft. Diese Basis-SIBs verbergen die komplexe Bedienung des Signalisierungsnetzes vor den Anwendungen und garantieren den Schutz des Signalisierungsnetzes vor Fehlbedienungen.

Weitere SIBs stellen sonstige allgemein benötigte Funktionen bereit, z.B. zur Auswertung von Rufnummern, Verteilen von Rufen nach bestimmten Kriterien oder zur Datenverwaltung. Diese SIBs können sowohl auf dem zentralen oder dem dezentralen System implementiert werden. Dies hängt von der SIB-Funktion ab, z.B. sollte ein SIB, der globale Netzdaten benötigt auf dem zentralen System implementiert sein.

Durch die entsprechende Kombination von SIBs und der Einstellung von SIB-Operanden können verschiedene Telekommunikationsanwendungen realisiert werden. Wie die SIBs kombiniert werden und wie die Operanden eingestellt sind, ist in der Anwendungslogik festgelegt. Die SIBs und die benötigte Anwendungslogik stehen heute, wie erwähnt, nur in den digitalen Vermittlungsstellen oder dem zentralen IN zur Verfügung.

Auf einer in Figur 1 schematisch dargestellten dezentralen Einrichtung (Dezentrales System) eines Kommunikationsnetzes ist eine Telekommunikationsanwendung mit Hilfe von Softwarebausteinen (ASTs) implementiert, die das externe Verhalten von dienstunabhängigen (Software) Bausteinen (SIBs), d.h. z.B. die benötigten Operanden sowie Ein- und Ausgänge, beschreiben. Zusätzlich enthalten diese auf der dezentralen Einrichtung befindlichen Softwarebausteine (ASTs) die Ausführungsmethode der jeweiligen dienstunabhängigen Bausteine. Diese dienstunabhängigen Bausteine selbst befinden sich auf einer zentralen Einrichtung. Die in der Figur 1 dargestelle dezentralen Einrichtung steht stellvertretend für eine mögliche Vielzahl von derartigen dezentralen Einrichtungen. Ebenso wird es in der Praxis in der Regel eine Mehrzahl von zentralen Einrichtungen geben, für welche die in Figur 1 dargestellte zentrale Einrichtung (Zentrales System) stellvertretend steht.

Wie in Figur 1 erkennbar, ist die in einem AST-Baustein bereitgestellte Ausführungsmethode nicht immer eine lokale Implementierung der Funktion eines dienstunabhängigen Bausteins (SIB-Funktion), sondern verwendet eine Schnittstelle zum Aufruf der SIB-Implementierung auf dem zentralen System (als "remote SIBx()" bezeichnet). Diese spezielle Ausführungsmethode im AST bereitet die notwendigen Daten für die SIB-Funktion auf, übermittelt diese an das zentrale System und veranlaßt dort die eigentliche Ausführung der SIB-Funktion. Nach Beendigung der SIB-Funktion sendet das zentrale System einen Rückgabewert an die aufrufende Methode des dezentralen Systems. Dieser Wert kann jetzt ausgewertet werden und für die weitere Steuerung der verteilten Anwendung verwendet werden.

Im zentralen System werden die Daten und Aufträge des dezentralen Systems zunächst von den SIB-Sicherheitsmodulen überprüft. Erst nach erfolgreicher Überprüfung werden die Daten und die Aufträge zur eigentlichen Verarbeitung weitergegeben. Die SIB-Sicherheitsmodule stellen folgende Funktionen und Schnittstellen bereit:
- Prüf- und Sicherheitsfunktionen
- eine Schnittstelle zu den entsprechenden Funktionen des dezentralen Systems
- eine Schnittstelle zu den SIB-Implementierungen des dezentralen Systems.

Die von der Anwendung benötigten SIB-Sicherheitsmodule werden für jede aktive verteilte Anwendung während der Anmeldephase instantiiert und mit den für die Anwendung zutreffenden Prüf- und Sicherheitsregeln initialisiert. Die Implementierungen der SIB-Funktionen selbst sind nur einmal auf dem zentralen System vorhanden und werden von den anwendungsspezifischen Sicherheitsmodulen zur Ausführung ser SIB-Funktionen aufgerufen.

Der Ablauf einer typischen verteilten Anwendung unterteilt sich in der Regel in mehrere Phasen:
1. Die Anmeldephase. In der Figur 1 wird diese Phase durch den SIB "initialiseAndStart" dargestellt. In dieser Phase stellt das dezentrale System die Verbindung zum zentralen System her. Das zentrale System überprüft die Berechtigungen des dezentralen Systems. Nach erfolgreicher Überprüfung meldet das dezentrale System die gewünschte Anwendung beim zentralen System an. Auch hier prüft das zentrale System, ob diese Anwendung gestartet und ausgeführt werden darf. Verläuft auch diese Überprüfung erfolgreich, instantiiert das zentrale System die SIB-Sicherheitsmodule für diese Anwendung, versorgt sie mit den Daten für die Prüf- und Sicherheitsregeln uns stellt die für die verteilte Anwendung notwendigen Ressourcen zur Verfügung. Das dezentrale System erhält vom zentralen System die notwendigen Informationen, um mit den SIB-Sicherheitsmodulen kommunizieren zu können. Danach ist die Anmeldephase abgeschlossen.
2. Die Arbeitsphase. In der Figur 1 wird diese Phase durch die baumartig angeordneten SIBs dargestellt. Diese Phase führt die verteilte Anwendung aus. Je nach Realisierung der SIBs werden die Funktionen auf dem dezentralen System oder über die Kommunikationsschnittstelle auf dem zentralen system ausgeführt.
3. Die Abmeldephase. Diese ist in der Figur 1 nicht besonders dargestellt. Die Arbeitsphase ist beendet, und das dezentrale system meldet die verteilte Anwendung beim zentralen System ab. Die auf dem zentralen System bereitgestellten Ressourcen werden freigegeben.

Das neue Verfahren trennt die Implementierung und Ausführung der Anwendungslogik von der Implementierung und Ausführung der SIBs. Dadurch ist es möglich, die Telekommunikationsanwendungen auf mehrere Systeme zu verteilen und so die Last für die einzelnen Systeme zu reduzieren. Die Aufteilung einer Anwendung erfolgt nach folgender Technik:
A) die Anwendungslogik sowie bestimmte Kommunikationsfunktionen sind auf dem dezentralen System implementiert. Auch die anwendungsspezifischen Daten stehen größtenteils auf diesem System zur Verfügung. Dieses System benötigt keine direkte Verbindung zum Signalisierungsnetz.
B) die Funktionen zur Anbindung an das Signalisierungsnetz, die Basis-SIBs sowie alle Funktionen die zur Abrechnung, Gebührenerfassung, Statistik oder der Erfüllung gesetzlicher Auflagen dienen, verbleiben auf den zentralen Systemen. Diese Systeme haben eine direkte Verbindung zum Signalisierungsnetz. Außerdem erhalten die zentralen Systeme noch bestimmte Sicherheitsmodule, die unter anderem die Kommunikation zu den verteilten Anwendungen steuern und die sonstigen Einstellungen für die verteilte Anwendung überwachen.

## Patentansprüche

1. Verfahren zur gesicherten Bereitstellung von Funktionen eines Signalisierungsnetzes für verteilte Telekommunikationsanwendungen, bei dem
a) eine Anwendungslogik auf einer dezentralen Einrichtung eines Kommunikationsnetzes implementiert wird oder vorhanden ist,
b) Funktionen zur Anbindung an das Signalisierungsnetz auf einer zentralen Einrichtung eingerichtet oder genutzt werden, c) Sicherheitsfunktionen zum Schutz des Signalisierungsnetzes und bzw. oder einer zentralen Einrichtung auf einer zentralen Einrichtung eingerichtet oder genutzt werden, und bei dem
d) Kommunikationsmittel für eine Kommunikation zwischen zentralen und dezentralen Einrichtungen vorgesehen sind, welche einen Aufruf zentral verfügbarer Funktionen aus einer dezentral implementierten Anwendungslogik ermöglichen.

2. Verfahren nach Anspruch 1, bei dem dienstunabhängige Bausteine (service independent building blocks, SIBs) auf einer zentralen Einrichtung eingerichtet oder genutzt werden.

3. Verfahren nach einem der vorhergehenden Ansprüche, bei dem sicherheitskritische Funktionen, wie z.B. Funktionen zur Abrechnung, Gebührenerfassung, Statistik oder zur Erfüllung gesetzlicher Auflagen auf einer zentralen Einrichtung eingerichtet oder genutzt werden.

4. Dezentrale Einrichtung eines Kommunikationsnetzes mit
a) Mitteln zur Implementierung einer Anwendungslogik und
b) Mitteln zur Kommunikation mit einer zentralen Einrichtung eines Kommunikationsnetzes, welche einen Aufruf zentral verfügbarer Funktionen aus einer dezentral implementierten Anwendungslogik ermöglichen.

5. Zentrale Einrichtung eines Kommunikationsnetzes mit
a) Funktionen zur Anbindung des Kommunikationsnetzes an ein Signalisierungsnetz,
b) Sicherheitsfunktionen zum Schutz des Signalisierungsnetzes und
c) Kommunikationsmitteln für eine Kommunikation mit einer dezentralen Einrichtung, welche einen Aufruf zentral verfügbarer Funktionen aus einer dezentral implementierten Anwendungslogik ermöglichen.

6. Zentrale Einrichtung eines Kommunikationsnetzes nach Anspruch 5 mit Mitteln zur Einrichtung oder Nutzung dienstunabhängiger Bausteine (SIBs).

7. Zentrale Einrichtung eines Kommunikationsnetzes nach einem der Ansprüche 5 oder 6, mit Mitteln zur Einrichtung oder Nutzung sicherheitskritischer Funktionen, wie z.B. Funktionen zur Abrechnung, Gebührenerfassung, Statistik oder zur Erfüllung gesetzlicher Auflagen.

## Revendications

1. Procédé pour la mise à disposition sécurisée de fonctions d'un réseau de signalisation pour des applications de télécommunications distribuées, dans lequel
a) on implémente une logique d'application sur un équipement décentral d'un réseau de communication ou elle y est présente,
b) on met en place ou utilise des fonctions de rattachement au réseau de signalisation sur un équipement central,
c) on met en place ou utilise des fonctions de sécurité pour la protection du réseau de signalisation et, resp. ou, d'un équipement central sur un équipement central, et dans lequel
d) des moyens de communication sont prévus pour une communication entre équipements centraux et décentraux, lesquels permettent un appel de fonctions disponibles centralement à partir d'une logique d'application implémentée décentralement.

2. Procédé selon la revendication 1, dans lequel on met en place ou utilise des composants indépendants du service (service independent building blocks, SIB) sur un équipement central.

3. Procédé selon l'une des revendications précédentes, dans lequel on met en place ou utilise des fonctions critiques sur le plan de la sécurité, telles que par exemple des fonctions de facturation, de saisie de frais, de statistique ou de satisfaction d'obligations légales sur un équipement central.

4. Équipement décentral d'un réseau de communication, comprenant
a) des moyens pour implémenter une logique d'application et
b) des moyens de communication avec un équipement central d'un réseau de communication, lesquels permettent un appel de fonctions disponibles centralement à partir d'une logique d'application implémentée décentralement.

5. Équipement central d'un réseau de communication, comprenant
a) des fonctions de rattachement du réseau de communication à un réseau de signalisation,
b) des fonctions de sécurité pour la protection du réseau de signalisation et
c) des moyens de communication pour une communication avec un équipement décentral, lesquels permettent un appel de fonctions disponibles centralement à partir d'une logique d'application implémentée décentralement.

6. Équipement central d'un réseau de communication selon la revendication 5, comprenant des moyens de mise en place ou d'utilisation de composants indépendants du service (SIB).

7. Équipement central d'un réseau de communication selon l'une des revendications 5 ou 6, comprenant des moyens de mise en place ou d'utilisation des fonctions critiques sur le plan de la sécurité, telles que par exemple des fonctions de facturation, de saisie de frais, de statistique ou de satisfaction d'obligations légales.

## Claims

1. Method for the secured availability of signalling network functions for distributed telecommunication applications, in which
a) an application logic is implemented or available on a decentralised component of a communication network,
b) functions for connection to the signalling network are set up or used on a central component,
c) security functions for protecting the signalling network and/or a central component are set up or used on a central component, and in which
d) means of communication are provided for communication between central and decentralised components, which enable centrally available functions to be called from a decentrally implemented application logic.

2. Method according to Claim 1, in which service-independent building blocks (SIBs) are set up or used on a central component.

3. Method according to one of the above claims, in which security-critical functions, such as - for example - functions for billing, charge registration, statistics or for fulfilling statutory requirements are set up or used on a central component.

4. Decentralised component of a communication network with
a) means for implementing an application logic, and
b) means for communicating with a central component of a communication network, which enable centrally available functions to be called from a decentrally implemented application logic.

5. Central component of a communication network with
a) functions for connecting the communication network to a signalling network,
b) security functions for protecting the signalling network, and
c) means of communication for communicating with a decentralised component, which enable centrally available functions to be called from a decentrally implemented application logic.

6. Central component of a communication network according to Claim 5, with means for setting up or using service-independent building blocks (SIBs).

7. Central establishment of a communication network according to one of Claims 5 or 6, with means for setting up or using security-critical functions, such as - for example - functions for billing, charge registration, statistics, or for fulfilling statutory requirements.
